# EUROPÄISCHE PATENTSCHRIFT

(11) **EP 0 386 274 B1**
(45) Veröffentlichungstag und Bekanntmachung des Hinweises auf die Patenterteilung: **08.03.1995**
(21) Anmeldenummer: 89103604.8
(22) Anmeldetag: 02.03.1989
(51) Int. Cl.: C02F 11/00, F26B 3/00

(54) **Verfahren und Vorrichtung zur Trocknung von Klärschlamm**
Process and device for drying sewage sludge
Procédé et installation pour le séchage des boues d'épuration

(43) Veröffentlichungstag der Anmeldung: 12.09.1990
(73) Patentinhaber: AXBRIDGE HOLDINGS Ltd., Edmonton, Alberta (CA)
(72) Erfinder: Schmidt, Gerhard, Sherwood Park Alberta (CA); Schmidt, Heinz, D-5042 Erftstadt (DE); Gerling-Kraus, Vera-Maria, D-5202 Hennef 1 (DE)
(74) Vertreter: Feder, Wolf-Dietrich, Dr. Dipl.-Phys.

(56) Entgegenhaltungen:
- BE-A- 417 069
- CA-A- 1 146 813
- DE-A- 1 080 930
- DE-A- 1 658 136
- DE-A- 1 922 230
- DE-A- 3 544 300
- GB-A- 2 050 589
- US-A- 4 176 465

## Beschreibung

Die Erfindung betrifft ein Verfahren und eine Vorrichtung zur Trocknung von Klärschlamm, insbesondere des in kommunalen Klärwerken anfallenden Klärschlamms.

In städtischen Klärwerken fallen große Mengen frischer oder ausgefaulter Klärschlamm an, der nur zu weniger als 10% aus Feststoffen besteht. Um diesen Schlamm zu verwerten oder zu beseitigen, ist daher zunächst eine Trocknung erforderlich. Durch mechanische Schlammtrocknung, wie z.B. auf Saugzellenfilter, erreicht man Trockenschlämme, deren Feststoffgehalt z.B. bei 30% liegt und die somit noch überwiegend aus Wasser bestehen. Diese Trockenschlämme sind im allgemeinen nicht geruchsfrei. Es ist weiter bekannt, Klärschlämme mit Heißluft von 600°C z.B. in Trockentrommeln zu trocknen, wobei eine erhebliche Steigerung des Feststoffgehalts des Trockenschlamms und ein im wesentlichen geruchsneutraler Trockenschlamm erreicht wird. Dabei gelangen allerdings flüchtige organische Schadstoffe aus dem Schlamm in die Brüden, so daß im weiteren Verlauf des Verfahrens ein mit Schadstoffen belastetes wässriges Kondensat oder eine schadstoffhaltige Abluft anfällt. Oftmals wird eine solche thermische Schlammtrocknung auch mit der Verbrennung des Trockenschlamms kombiniert, wobei die mit Schadstoffen beladene Luft ebenfalls durch die Verbrennungszone geleitet wird, um die Schadstoffverbrennung zu erreichen.

Das erfindungsgemäße Verfahren geht aus von einem Verfahren mit den Merkmalen aus dem Oberbegriff des Patentanspruchs 1 und die erfindungsgemäße Vorrichtung geht aus von einer Vorrichtung mit den Merkmalen aus dem Oberbegriff des Patentanspruchs 8. Ein solches Verfahren und eine derartige Vorrichtung sind beispielsweise in DE-A- 16 58 136 beschrieben. Bei dem bekannten Verfahren werden durch Verbrennung der Feststoffe des Schlammes in einer Feuerung heiße Gase erzeugt, die in einen indirekten Wärmeaustausch mit dem in Rohren geführten Schlamm gebracht werden. In einer weiteren Verfahrensstufe wird der erhitzte Schlamm in einer von unten beheizten Ausdampfwanne, die mit einer Haube luftdicht abgeschlossen ist, weiter erhitzt und die entstehenden Brüden werden in einen Kondensator abgeführt.

Es ist weiterhin aus der DE-A- 19 22 230 eine Vorrichtung zur kontinuierlichen Trocknung einer Probe von feuchten und gegebenenfalls zusammenbackenden körnigen Produkten bekannt, die einen Vortrocknungsofen mit Trögen und einer Förderschnecke aufweist, der einerseits durch unter dem Boden des Troges angeordnete Heizwiderstände und andererseits durch über dem Trog angeordnete Infrarotstrahlungsröhren beheizt wird. In einer zweiten Verfahrensstufe werden die vorgetrockneten körnigen Produkte auf einer geneigten Rüttelschurre, die ebenfalls von oben mittels Infrarotstrahlungsröhren beheizt ist, zu Ende getrocknet. Diese bekannte Vorrichtung dient in erster Linie zur Trocknung von agglomerierten Materialien, wie Kohle.

In der US-A- 4 176 465 ist weiterhin eine Vorrichtung beschrieben, mittels der ein Material aus feuchten Festteilchen getrocknet wird, indem die Teilchen in einem geschlossenen Schneckenförderer aufwärts gefördert werden. Der Schneckenförderer wird über seinen Mantel indirekt mit Dampf beheizt. Diese Vorrichtung ist in erster Linie gedacht zur Rückgewinnung eines organischen Lösungsmittels aus einem körnigen Produkt, wie beispielsweise Sand, aus dem Perprodukte herausgelöst wurden.

Der Erfindung liegt die Aufgabe zugrunde, ein Verfahren und eine Vorrichtung zur Trocknung von Klärschlamm zu schaffen, bei denen kein mit Schadstoffen beladenes Abgas und kein schadstoffhaltiges Kondensat anfallen. Darüber hinaus soll der feuchte Klärschlamm, der z.B. ein Frischschlamm oder ein ausgefaulter Schlamm sein kann, bis auf einen Feststoffgehalt von mehr als 95 Gew.-%, insbesondere mehr als 98 Gew.-% getrocknet werden. Weitere Vorteile des erfindungsgemäßen Verfahrens und der Vorrichtung gehen aus der nachfolgenden Beschreibung hervor.

Die Lösung dieser Aufgabe erfolgt in verfahrensmäßiger Hinsicht mit den Merkmalen aus dem kennzeichnenden Teil des Patentanspruchs 1. Vorteilhafte Weiterbildungen des Verfahrens sind in den Ansprüchen 2 bis 7 beschrieben. Durch die gleichzeitige Einwirkung von Wärmestrahlung und Wärmeübertragung von der Heißluft auf den feuchten Klärschlamm wird bereits eine weitgehende Trocknung erreicht, z.B. von einem Feststoffgehalt von weniger als 10% auf einen Feststoffgehalt von 50 bis 90%. Dabei entwickeln sich erhebliche Wasserdampfmengen. Die von dem mechanisch fortbewegten Klärschlamm abgegebenen flüchtigen organischen Schadstoffe, wie z.B. Kohlenwasserstoffe und Dioxine, unterliegen in der Dampfphase der Einwirkung der Wärmestrahlung und werden dabei gekrackt bzw. zersetzt. Die Krack- bzw. Zersetzungsprodukte sind im wesentlichen unschädlich und bewirken daher - soweit sie mit den Brüden kondensieren - keine Verunreinigung des Kondensats. Eine oxidative Zersetzung des Klärschlamms ist ausgeschlossen, da die Dampfphase im wesentlichen frei von Sauerstoff ist, der Schlamm also nicht mit Sauerstoff in Berührung kommt.

Bei dem erfindungsgemäßen Verfahren setzt man die Trocknung des in der ersten Stufe durch die Wärmestrahlung teilweise getrockneten Klärschlamms in einer zweiten Stufe und ggfs. weiteren Stufen unter mechanischer Fortbewegung und indirektem Wärmeaustausch mit der erzeugten Heißluft fort und führt die in der zweiten Stufe und den ggfs. weiteren Stufen entwickelten Brüden mit einem Warmluftstrom ab und kondensiert sie. Während aus der ersten (offenen) Stufe nur Brüden in den Kondensator angezogen werden, kann der in den folgenden Stufen aus dem Schlamm entwickelte Wasserdampf mit einem Luftstrom in den Kondensator geführt werden Dabei setzt man zweckmäßigerweise die durch den Wärmeaustausch in der zweiten und ggfs. weiteren Stufen teilweise abgekühlte Heißluft als Warmluftstrom zur Abführung der in diesen Stufen entwickelten Brüden ein. Den nach der Brüdenkondensation verbleibende Luftstrom führt man der Heizöl- bzw. Heizgasverbrennung als Verbrennungsluft zu, wobei die in dem Luftstrom ggfs. enthaltenen Schadstoffe verbrannt werden.

Nach der bevorzugten Ausführungsform des erfindungsgemäßen Verfahrens bringt man die bei der Heizöl- oder Heizgasverbrennung anfallende Heißluft mit einer Temperatur in dem Bereich von 500 bis 850° C mit dem Klärschlamm in Wärmeaustausch. Dabei ist in allen Fällen der indirekte Wärmeaustausch gemeint, so daß der Schlamm nicht mit Luft in Berührung kommt und auch nach fast vollständiger Trocknung des Schlamms keine oxidative Zersetzung eintreten kann.

Zweckmäßigerweise bewegt man den Klärschlamm in zwei aufeinanderfolgenden Stufen in entgegengesetzten Richtungen im wesentlichen geradlinig fort. Durch die hin- und hergehende Schlammführung in den übereinanderliegenden Stufen ist die Trocknung bei vergleichsweise geringem Grundflächenbedarf möglich, so daß die Vorrichtung auch auf einem Fahrzeug angeordnet werden kann.

Nach der Erfindung werden in der ersten Stufe aus dem Klärschlamm freigesetzte organische Verbindungen, insbesondere Kohlenwasserstoffe und/oder Dioxine, in der Dampfphase durch die Strahlungswärme bei Temperaturen in dem Bereich von vorzugsweise 850 bis 1200° C gekrackt. Ein besonderes Merkmal des erfindungsgemäßen Verfahrens sind die hohen Temperaturen von 800 bis 1200°C, insbesondere 900 bis 1150°C in der Dampfphase bei gleichzeitigem Ausschluß von Luftsauerstoff, durch die nicht nur der Schlamm schnell oxidative Zersetzung Wasser abgibt, sondern auch die aus dem Schlamm in die Dampfphase übergegangenen Schadstoffe zu weniger oder nicht schädlichen Verbindungen gekrackt oder zersetzt werden.

Zweckmäßigerweise saugt man die in der ersten Stufe entwickelten Brüden durch Unterdruck in die Kondensationsstufe. Hierzu wird der Kondensator unter einem Unterdruck gehalten, beispielsweise durch einen abströmseitig der Kondensationsstufe angeordnetes Saugzuggebläse. Die nach der Kondensation verbleibenden Gase können nach einer Filtration bei der Heizöl- bzw. Heizgasverbrennung eingesetzt werden. Um eine weitgehende Brüdenkondensation zu erreichen, erfolgt die Kondensation durch Wärmeaustausch mit Kühlwasser, das im Kreislauf durch eine Tiefkühlanlage gekühlt wird.

Vorrichtungsmäßig wird die Aufgabe erfindungsgemäß mit den Merkmalen aus dem kennzeichnenden Teil des Patentanspruchs 8 gelöst. Die Vorrichtung besteht demgemäß im wesentlichen aus den Heizstrahlern, die neben der Wärmestrahlung auch Heißluft erzeugen, den Klärschlammfördermitteln, die den Klärschlamm durch den Wärmestrahlungsbereich fördern, dabei der Wärmestrahlung aussetzen, wobei der Schlamm Wasser in Dampfform abgibt, sowie dem Kondensator für die Kondensation des entwickelten Wasserdampfes. Von Bedeutung ist ferner, daß der Wärmeaustauscher zur Erzeugung der Heißluft in den Wärmestrahler integriert ist und mit diesem zusammen eine kompakte Baueinheit darstellt. Daher kann auch ein fahrbarer Trockner mit mehreren dieser Wärmestrahler bestückt werden. Der einzelne Wärmestrahler erzeugt einen Wärmestrahlungskegel. Durch lineare Aneinanderreihung mehrerer Wärmestrahler erhält man einen langgestreckten Strahlungsbereich, in dem die Klärschlammfördermittel in Längsrichtung angeordnet sind.

Nach der bevorzugten Ausführungsform der erfindungsgemäßen Vorrichtung bestehen die Klärschlammfördermittel aus mehreren parallel nebeneinander angeordneten Trögen mit in den Trögen drehbaren Förderschnecken und sind die Tröge mit einem Mantel und die Förderschnecken mit einer Hohlwelle für die Beheizung mit Heissluft ausgestattet. Die in dem die Brennkammer des Wärmestrahlers ringförmig umgebenden Wärmeaustauscher erzeugte Heissluft dient zur Beheizung dieser Trogschnecken in der Weise, daß die bis zu 850 °C heiße Luft zunächst durch den Trogmantel und dann in der Gegenrichtung durch die Hohlwelle der Schnecke geleitet wird. Bei dieser Ausführungsform sind vorzugsweise an den Trögen in Troglängsrichtung verlaufende, mit Öffnungen versehene Absaugkanäle angebracht, die an den Kondensator angeschlossen sind. Diese Absaugkanäle werden vom Kondensator her unter Unterdruck gehalten, so daß die aus dem Klärschlamm abgegebenen Brüden in die Absaugkanäle und von dort in den Kondensator gesaugt werden.

Bei der erfindungsgemäßen Vorrichtung ist vorgesehen, daß unterhalb der offenen Klärschlammfördermittel wenigstens eine Lage, vorzugsweise zwei Lagen geschlossener Klärschlammfördermittel angeordnet sind, deren Förderweg im wesentlichen gleich dem Förderweg der offenen Klärschlammfördermittel sind und von Lage zu Lage abwechselnd entgegengesetzte Richtungen haben. In den geschlossenen Klärschlammfördermitteln wird der teilweise getrocknete Klärschlamm weiter bis auf einen End-Feststoffgehalt von mindestens 95 Gew.-%, vorzugsweise mindestens 98 Gew.-% getrocknet. Durch die lagenweise Anordnung der Klärschlammfördermittel übereinander ergibt sich eine kompakte Bauweise der Vorrichtung mit vergleichsweise geringem Grundflächenbedarf. Nach der bevorzugten Ausführungsform bestehen die geschlossenen Klärschlammfördermittel in jeder Lage aus mehreren parallel nebeneinander angeordneten Rohren mit in den Rohren drehbaren Förderschnecken, sind die Rohre mit einem Mantel und die Förderschnecken mit einer Hohlwelle zur Beheizung mit Heissluft ausgestattet und ist an jedem Rohr ein in Rohrlängsrichtung verlaufender, durch Öffnungen mit dem Rohrinnenraum verbundener Abzugskanal angebracht, der einerseits an die zentrale Bohrung der Hohlwelle oder an den Mantel des betreffenden Rohres und andererseits an dem Kondensator angeschlossen ist. Jede Lage der Klärschlammfördermittel kann aus fünf bis etwa fünfzehn, insbesondere aus acht bis zwölf Trögen bzw. Rohren bestehen. Die Beheizung der Rohre erfolgt wie die Beheizung der Tröge in der Weise, daß die Heissluft jeweils eines Wärmestrahlers in eine Lage der Rohrschnecken eingeleitet wird. Bei der Rohrschnecke wird die Heissluft zunächst durch den Rohrmantel, anschließend von dort durch die Hohlwelle und dann von dieser durch den Abzugskanal und dann zum Kondensator geleitet. Die in den Rohren entwickelten Brüden treten durch die genannten Öffnungen in den Abzugskanal und werden mit dem Luftstrom in den Kondensator getragen und dort kondensiert.

Vorzugsweise sind bei dieser Ausführungsform jeder Trog und die unter ihm liegenden Rohre durch abwechselnd an beiden Enden vorgesehene Stutzen verbunden, so daß sich ein hin und hergehender Förderweg des Klärschlamms durch den Trog und die Rohre ergibt.

Zweckmäßigerweise sind die Stutzen der untersten Lage der Schneckenrohre an ein Austragschneckenrohr angeschlossen, das quer zu den darüber liegenden Schneckenrohren angeordnet ist. Die unterste Rohrlage, die beispielsweise aus 10 Schneckenrohren besteht, gibt den Trockenschlamm durch Stutzen in das Austragschneckenrohr ab, aus dem der Trockenschlamm seitlich ausgetragen wird.

Die Förderschnecken sind an Antriebsmotoren angeschlossen, und die Drehzahl der Motoren einer Schneckenlage ist unabhängig von der Drehzahl der Motoren der anderen Schneckenlagen steuerbar. Hierdurch ist es möglich, die Verweilzeit des Klärschlamms in der Trogschneckenlage und den darunter liegenden Rohrschneckenlagen, d.h. in den einzelnen Trocknungsstufen unterschiedlich einzustellen und der Art des Schlamms bzw. der Wasserverdampfungsgeschwindigkeit anzupassen.

Weiterhin ist vorgesehen, daß an dem einen Ende der Trocknungskammer eine durch die Kammerwandung ragende Einführeinrichtung angeordnet ist, die aufgabeseitig mit einem Beschickungstrichter verbunden ist und abgabeseitig über dem Aufgabeende der offenen Klärschlammfördermittel endet. Die Beschickung des Beschickungstrichters mit Schlamm kann beispielsweise mittels eines Förderbandes erfolgen. Nach der bevorzugten Ausführungsform besteht die Einführeinrichtung aus einer der Anzahl der Tröge gleichen Anzahl von Einführschnecken, die Rohrschnecken sein können. Dabei ist jede Einführschnecke einem Trog zugeordnet. Die Einführschnecken können auch beheizt werden, wozu zweckmäßigerweise die aus der Hohlwelle der betreffenden Trogschnecke abströmende Warmluft dient.

Nach der bevorzugten Ausführungsform ist die Vorrichtung auf einem Aufleger-Fahrgestell angebracht. Es ist daher möglich, die mobile Vorrichtung mit einem Fahrzeug, z.B. einem Sattelschlepper, an verschiedenen Standorten zum Einsatz zu bringen. So kann auch in kleineren Klärwerken das erfindungsgemäße Verfahren zum Einsatz kommen, wo der geringere Schlammanfall nur einen zeitweiligen Betrieb der Anlage erfordert.

Die Erfindung wird nachfolgend an Hand der Zeichnung näher beschrieben. Es zeigen
Figur 1 ein vereinfachtes Flußdiagramm des erfindungsgemäßen Verfahrens;
Figur 2 ein vereinfachtes Flußdiagramm der Luftführung bei dem erfindungsgemäßen Verfahren;
Figur 3 eine vereinfachte Darstellung des bei dem erfindungsgemäßen Verfahren eingesetzten Heizstrahlers;
Figur 4 eine Gesamtdarstellung der erfindungsgemäßen Vorrichtung;
Figur 5 eine perspektivische Darstellung der in der Vorrichtung verwendeten Trogschnecke; und
Figur 6 eine perspektivische Darstellung der bei der erfindungsgemäßen Vorrichtung verwendeten Rohrschnecke, wobei ein Teil des Außenmantels weggebrochen ist.

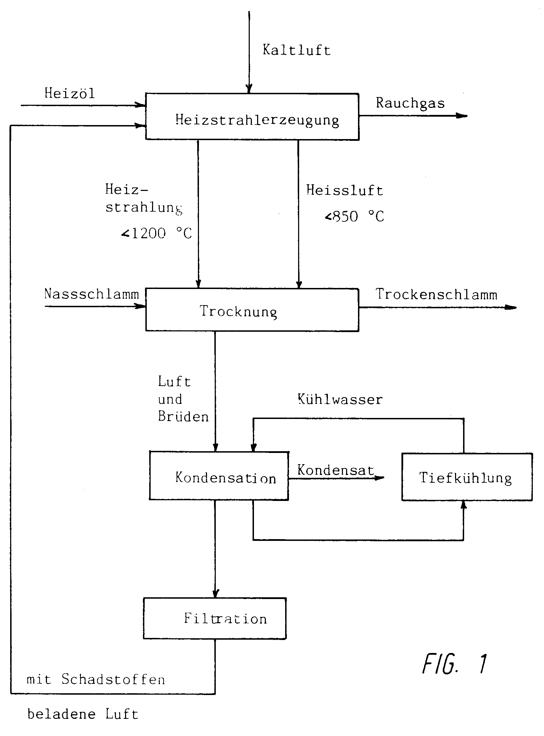

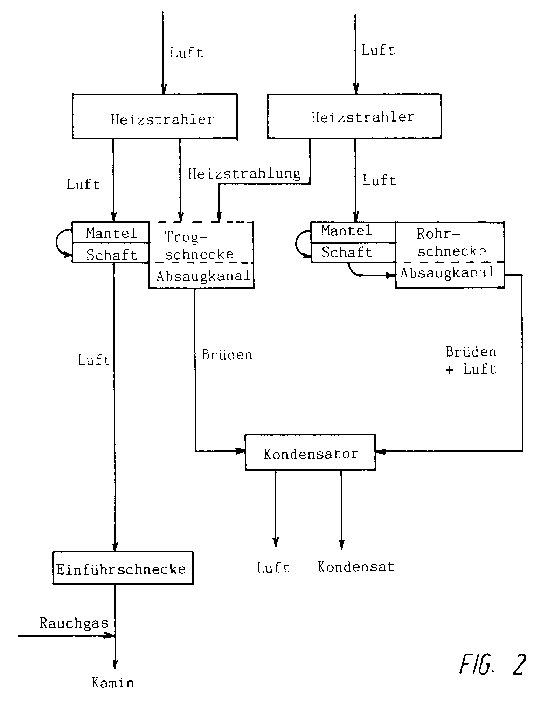

Das Diagramm der Figur 1 zeigt die wesentlichen Stufen des erfindungsgemäßen Verfahrens und ist aus sich heraus verständlich. Figur 2 zeigt die Heissluftführung in einer erfindungsgemäßen Vorrichtung in schematischer Darstellungsweise. Dabei sind zur Vereinfachung nur zwei Heizstrahler dargestellt, obwohl die Vorrichtung drei oder auch mehr Strahler umfassen kann. Während die Heizstrahlung aus allen Strahlern auf die zuoberst liegenden Trogschnecken gerichtet ist, wird die von einem Heizstrahler erzeugte Heissluft jeweils nur einer Schneckenlage, also z.B. den Trogschnecken oder aber der einen oder der anderen Rohrschneckenlage zur Beheizung zugeführt. Dabei durchströmt die Luft zunächst den Mantel der Schnecke und tritt dann aus dem Mantel in die Bohrung der Schneckenwelle ein. Bei den Trogschnecken strömt die Heissluft aus der Schneckenwelle weiter zur Einführschnecke, um auch diese zu beheizen. Da diese Heissluft nur in indirektem Wärmetausch mit dem Schlamm war, enthält sie keinerlei Verunreinigungen und kann abströmseitig der Einführschnecke in die Atmosphäre abgeblasen werden. Beispielsweise wird sie mit Rauchgas vermischt dem Kamin zugeführt. Die in der Trogschnecke entwickelten Brüden werden durch den Absaugkanal in den Kondensator gesaugt und dort kondensiert.

Bei der Rohrschnecke tritt die Heissluft ebenfalls zunächst in den Mantel und von dort in die Schneckenwelle ein. Anschließend durchströmt die noch warme Luft den Absaugkanal der Schnecke und fördert damit die aus dem Klärschlamm entwickelten Brüden in den Kondensator. Nach der Kondensation der Brüden wird die verbleibende Luft für die Verbrennung in den Heizstrahlern eingesetzt.

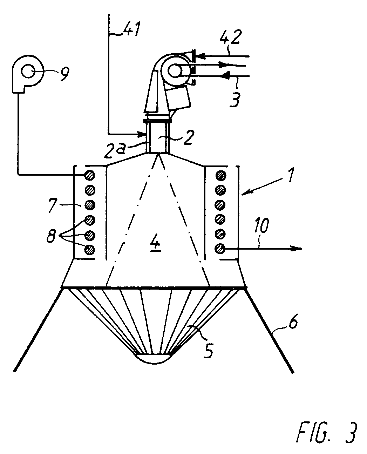

Figur 3 zeigt einen Heizstrahler 1 zur Erzeugung von Infrarotstrahlung und Heissluft, der in der erfindungsgemäßen Trocknungsvorrichtung Verwendung findet. Der Heizstrahler hat einen Heizölbrenner 2, dem durch Leitung 3 Heizöl und durch die Leitung 42 Verbrennungsluft zugeführt wird. Der Brenner 2 ist von einem zur Brennkammer 4 offenen Hohlmantel 2^{a} umgeben, dem durch die Leitung 41 Abluft aus dem Brüdenkondensator 18 zugeführt wird. In der Brennkammer 4 herrschen Temperatur bis zu 1700 °C. Der metallische Strahlkegel 5 strahlt nach unten Wärmestrahlung ab, die unter dem Kegel zu Temperaturen bis zu 1200 °C führen. Der Strahlkegel 5 ist von einem kegelstumpfförmigen Reflexionsschirm 6 umgeben, der die Wärmestrahlung bündelt. Die Kammer 4 ist von einer weiteren Kammer 7 umgeben, die von dem heißen Verbrennungsgas aus Brennkammer 4 durchströmt wird. In der Kammer 7 ist ein wendelförmig verlaufendes Rohr 8 untergebracht, das an ein Luftgebläse 9 angeschlossen ist. Das Gebläse 9 saugt Luft aus der Umgebung an und drückt sie durch den Wärmeaustauscher 8,7. Die dabei erzeugte Heissluft verläßt den Wärmeaustauscher bei 10 mit Temperaturen bis zu 850 °C, vorzugsweise 600 bis 800 °C.

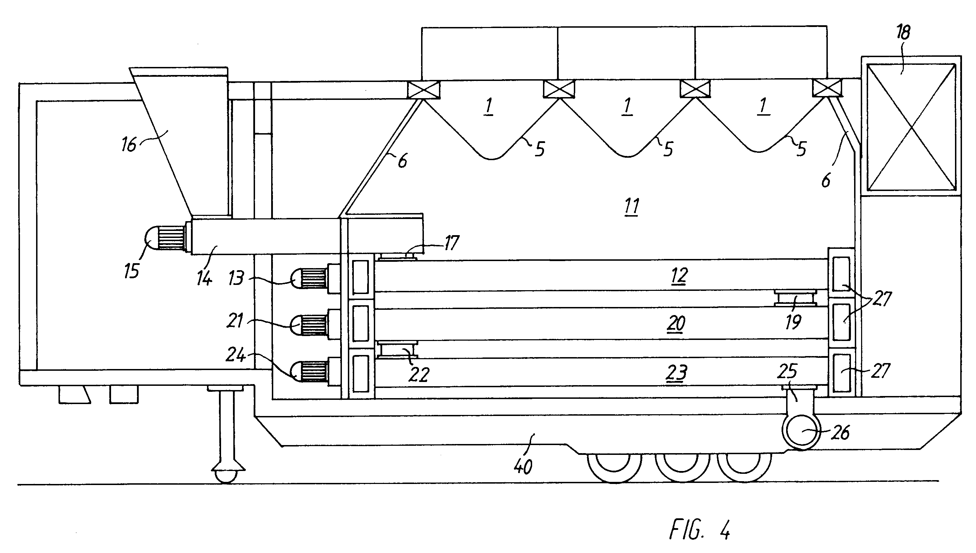

Die in Figur 4 dargestellte erfindungsgemäße Vorrichtung ist auf einem Fahrgestell 40 angebracht, das nach Art eines Aufliegers gebaut ist und durch eine Zugmaschine gezogen werden kann. Die Vorrichtung hat drei Heizstrahler 1, deren Strahlkegel 5 Wärmestrahlung in die darunter liegende Trocknungskammer 11 abgeben. In der Trocknungskammer 11 sind zehn in Fahrzeuglängsrichtung angeordnete Trogschnecken 12 gelagert, deren Schnecken durch Elektromotoren 13 angetrieben werden. Jede Trogschnecke 12 wird durch eine Einführschnecke 14 beschickt, die ebenfalls durch einen Elektromotor 15 angetrieben wird. Die Reihe der Einführschnecken 14 nimmt den feuchten Klärschlamm von einem Beschickungstrichter 16 auf und fördert ihn bis zu einem Stutzen 17, durch den der Schlamm in den Schneckentrog 12 gedrückt wird. In dem Trog 12 ist der feuchte Klärschlamm der direkten Einwirkung der Wärmestrahlung der drei Strahler 1 ausgesetzt. Außerdem werden der Trog 12 und die Schneckenwelle noch durch Heissluft beheizt, wie weiter unten noch näher erläutert wird. Der feuchte Klärschlamm wird durch die Schnecke des Troges bis zum anderen Ende des Rohres befördert, dabei umgewälzt und bereits weitgehend getrocknet. Die entstehenden Brüden werden in einen Absaugkanal gesaugt, der weiter unten näher beschrieben wird, und darin in einen Kondensator 18 geleitet, in dem sie kondensiert werden.

Der teilweise getrocknete Klärschlamm gelangt durch den Stutzen 19 in das Schneckenrohr 20, dessen Schnecke durch einen Elektromotor 21 angetrieben wird. In dem Schneckenrohr 20 wird der teilweise getrocknete Klärschlamm wieder nach vorne zum Stutzen 22 befördert. Das Schneckenrohr 20 wird durch Heissluft aus dem mittleren Heizstrahler 1 beheizt, so daß die Trocknung des Schlamms während seiner Förderung zum Stutzen 22 weiter fortschreitet. Die hierbei entstehenden Brüden werden durch einen Absaugkanal in dem Rohr 20, der weiter unten näher beschrieben ist, mit einem Warmluftstrom abgezogen und ebenfalls dem Kondensator 18 zugeführt und kondensiert.

Der weitgehend getrocknete Klärschlamm gelangt durch den Stutzen 22 in das untere Schneckenrohr 23, in dem die fast vollständige Trocknung, d.h. die Trocknung bis auf einen Feststoffgehalt von etwa 98 % erfolgt. Die Schnecke des Rohres 23 wird ebenfalls durch einen Elektromotor 24 angetrieben, wodurch der Schlamm nach hinten zum Stutzen 25 befördert wird. Der trockene Schlamm wird durch den Stutzen 25 in die querliegende Austragschnecke 26 gedrückt, die den Trockenschlamm auf einer Seite der Vorrichtung auswirft. Jeweils an beiden Enden der Schneckentröge 12 und Schneckenrohre 20,23 sind Luftkästen 27 vorgesehen, die der in Figur 2 im einzelnen dargestellten Luftführung, speziell der Umlenkung von dem Mantel in die Bohrung der Hohlwelle dienen.

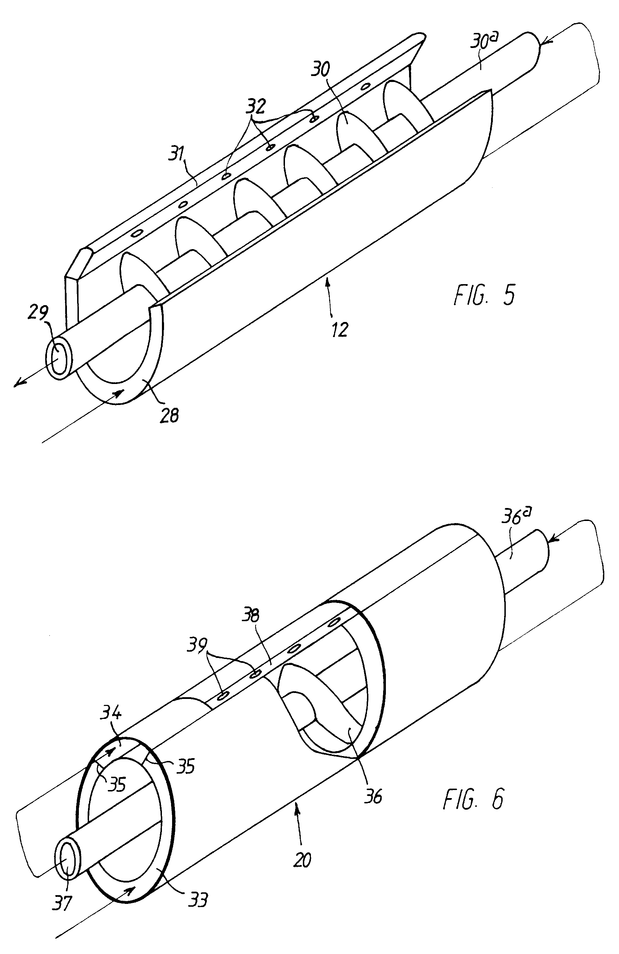

Der in Figur 5 vereinfacht dargestellte Schneckentrog 12 hat einen Hohlmantel 28, durch den die von einem Heizstrahler 1 erzeugte Heissluft geleitet wird. Die aus dem Mantel 28 abströmende Heissluft tritt dann entsprechend dem eingezeichneten Pfeil in die Bohrung 29 der Schneckenwelle 30^{a} ein und beheizt damit die Schnecke 30. Auf dem Schneckentrog 12 ist ein Absaugkanal 31 angebracht, der auf der Seite der Schnecke 30 eine Reihe von Öffnungen 32 aufweist. Der Absaugkanal 31 ist an den Kondensator 18 angeschlossen (nicht dargestellt), der seinerseits unter Unterdruck gehalten wird, so daß die in dem Trog 12 aus dem Klärschlamm entwickelten Brüden durch die Öffnungen 32 und den Absaugkanal 31 in den Kondensator gesaugt werden.

Das in Figur 6 dargestellte Schneckenrohr 20 ist identisch mit dem Schneckenrohr 23 sowie weiteren Schneckenrohren, die ggfs. in einer vierten Lage vorgesehen sein können. Das Schneckenrohr 20 hat einen Hohlmantel 33, in dem durch radiale Wandungen 35 ein Absaugkanal 34 abgeteilt ist. Die Schneckenwelle 36^{a} der Schnecke 36 ist ebenfalls zur Beheizung mit einer Bohrung 37 versehen. Im Bereich des Absaugkanals 34 ist die Innenwand 38 des Rohres 20 über seine gesamte Länge mit Öffnungen 39 versehen. Durch die Öffnungen 39 gibt der Klärschlamm Brüden in den Absaugkanal 34 ab. Die Heissluft zur Beheizung des Schneckenrohrs 20 wird von einem Heizstrahler 1 kommend in Pfeilrichtung zunächst in den Rohrmantel 33 geleitet, anschließend in die Bohrung 37 der Schneckenwelle 36^{a} und schließlich in den Absaugkanal 34, durch den die Brüden abgeleitet und dann mit dem Luftstrom in den Kondensator 18 befördert werden.

## Patentansprüche

1. Verfahren zur Trocknung von Klärschlamm, bei dem der Klärschlamm in mehreren Verfahrensstufen unter mechanischer Fortbewegung der Einwirkung von durch Verbrennung von Brennstoffen erzeugter Wärme ausgesetzt wird, wobei in mindestens einer Verfahrensstufe die Wärme durch indirekten Wärmeaustausch mit durch die Verbrennung erzeugten heißen Gasen zugeführt wird und in mindestens einer Verfahrensstufe die aus dem Klärschlamm entwickelten Brüden aus dem Raum oberhalb des Klärschlamms abgezogen und kondensiert werden und verbleibende Gase der besagten Verbrennung zugeführt werden, dadurch gekennzeichnet, daß man durch Verbrennung von Heizöl oder Heizgas gleichzeitig Wärmestrahlung und Heißluft erzeugt und in einer ersten Verfahrensstufe auf den mechanisch fortbewegten Klärschlamm direkt Wärmestrahlung einwirken läßt und ihn gleichzeitig in indirekten Wärmeaustausch mit der erzeugten Heißluft bringt und in einer zweiten Verfahrensstufe und gegebenenfalls weiteren Verfahrensstufen den mechanisch fortbewegten Klärschlamm in fortgesetzten indirekten Wärmeaustausch mit der erzeugten Heißluft bringt, wobei man die in der zweiten und gegebenenfalls den weiteren Verfahrensstufen entwickelten Brüden abführt und kondensiert, wobei man in der ersten Verfahrensstufe aus dem Klärschlamm freigesetzte organische Verbindungen, wie z.B. Kohlenwasserstoffe und Dioxine, in der Dampfphase durch die Strahlungswärme bei Temperaturen in dem Bereich von 800 bis 1200°C krackt.

2. Verfahren nach Anspruch 1, dadurch gekennzeichnet, daß man die durch Wärmeaustausch in der zweiten und gegebenenfalls weiteren Stufen teilweise abgekühlte Heißluft als Warmluftstrom zur Abführung der in diesen Stufen entwickelten Brüden einsetzt.

3. Verfahren nach Anspruch 1 oder 2, dadurch gekennzeichnet, daß man die Heißluft mit einer Temperatur in dem Bereich von 500 bis 850° C mit dem Klärschlamm in indirekten Wärmeaustausch bringt.

4. Verfahren nach einem der Ansprüche 1 bis 3, dadurch gekennzeichnet, daß man den Klärschlamm in zwei aufeinanderfolgenden Verfahrensstufen in entgegengesetzten Richtungen im wesentlichen geradlinig fortbewegt.

5. Verfahren nach einem der Ansprüche 1 bis 4, dadurch gekennzeichnet, daß die in der ersten Verfahrensstufe entwickelten Brüden durch Unterdruck abgezogen werden.

6. Verfahren nach einem der Ansprüche 1 bis 5, dadurch gekennzeichnet, daß nach dem Kondensieren der Brüden verbleibenden Gase vor der Verbrennung einer Filtration unterwirft.

7. Verfahren nach einem der Ansprüche 1 bis 6, dadurch gekennzeichnet, daß das Kondensieren der Brüden mit im Kreislauf tiefgekühltem Kühlwasser durchgeführt wird.

8. Vorrichtung zur Trocknung von Klärschlamm zur Durchführung des Verfahrens nach einem der Ansprüche 1 bis 7, mit einer Trocknungskammer (11), in der mechanische Klärschlammfördermittel (12, 20, 23) angeordnet sind, deren Förderweg sich von einer Zuführung (17) bis zu einer Abführung (25) erstreckt, wobei die Trocknungskammer (11) strömungsmäßig an einen Kondensator (18) angeschlossen ist und mit Verbrennungsmitteln (1) zur Erzeugung heißer Gase versehen ist, welchen der vom Kondensator (18) abgegebene Luftstrom zugeführt wird, sowie mit Mitteln (34, 37) zum indirekten Wärmeaustausch zwischen den heißen Gasen und dem Klärschlamm, gekennzeichnet durch folgende Merkmale:
a) in der Trocknungskammer (11) sind als Verbrennungsmittel mehrere Wärmestrahler (1) nebeneinander angeordnet, mit je einer Brennkammer (4), deren untere Wandung als Wärmestrahlungsfläche (5) ausgebildet ist, einem Heizöl- oder Heizgasbrenner (2) an jeder Brennkammer und einem Wärmeaustauscher (7, 8) zur Lufterhitzung durch die heißen Verbrennungsgase;
b) unterhalb der Wärmestrahlungsflächen (5) sind in der Trocknungskammer (11) offene Klärschlammfördermittel (12) angeordnet, deren Förderweg sich im wesentlichen von dem einen zum anderen Ende des Strahlungsbereiches der Wärmestrahler (1) erstreckt und die zur indirekten Beheizung mit Heißluft eingerichtet sind und
c) unterhalb der offenen Klärschlammfördermittel (12) ist wenigstens eine Lage geschlossene Klärschlammfördermittel (20, 23) angeordnet, deren Förderwege im wesentlichen gleich dem Förderweg der offenen Klärschlammfördermittel (12) sind und von Lage zu Lage abwechselnd entgegengesetzte Richtungen haben und die zur indirekten Beheizung mit Heißluft eingerichtet und mit Mitteln (34) zur Abführung der Brüden versehen sind.

9. Vorrichtung nach Anspruch 8, dadurch gekennzeichnet, daß die offenen Klärschlammfördermittel aus mehreren parallel nebeneinander angeordneten Trögen (12) mit in den Trögen drehbaren Förderschnecken (30) bestehen und die Tröge (12) mit einem Hohlmantel (28) für die Beheizung mit Heißluft ausgestattet sind.

10. Vorrichtung nach Anspruch 9, dadurch gekennzeichnet, daß an den Trögen (12) in Troglängsrichtung verlaufende, mit Öffnungen (32) versehene Absaugkanäle (31) angebracht sind, die an den Kondensator (18) angeschlossen sind.

11. Vorrichtung nach einem der Ansprüche 8 bis 10, dadurch gekennzeichnet, daß die geschlossenen Klärschlammfördermittel in jeder Lage aus mehreren parallel nebeneinander angeordneten Rohren (20) mit in den Rohren drehbaren Förderschnecken (36) bestehen, und die Rohre (20) mit einem Hohlmantel (33) zur Beheizung mit Heißluft ausgestattet sind und an jedem Rohr (20) ein in Rohrlängsrichtung verlaufender, durch Öffnungen (39) mit dem Rohrinnenraum verbundener Abzugskanal (34) angebracht ist, der an den Kondensator (18) angeschlossen ist.

12. Vorrichtung nach Anspruch 11, dadurch gekennzeichnet, daß der Abzugskanal einerseits an die zentrale Bohrung (37) der Hohlwelle (36a) oder an den Mantel (33) des Rohres (20) und andererseits an den Kondensator (16) angeschlossen ist.

13. Vorrichtung nach Anspruch 9 oder 11, dadurch gekennzeichnet, daß die Förderschnecken (30, 36) mit einer Hohlwelle (30a, 36a) für die Beheizung mit Heißluft ausgestattet sind.

14. Vorrichtung nach Anspruch 11, dadurch gekennzeichnet, daß jeder Trog (12) und die unter ihm liegenden Rohre (20) durch abwechselnd an beiden Enden vorgesehene Fallstutzen (19, 22) verbunden sind, so daß sich ein hin- und hergehender Förderweg des Klärschlamms durch den Trog und die Rohre ergibt.

15. Vorrichtung nach Anspruch 14, dadurch gekennzeichnet, daß die Fallstutzen (25) der untersten Lage der Schneckenrohre (23) an ein Austragsschneckenrohr (26) angeschlossen sind, das quer zu den darüberliegenden Schneckenrohren (20, 23) angeordnet ist.

16. Vorrichtung nach einem der Ansprüche 9 bis 15, dadurch gekennzeichnet, daß die Förderschnecken (30, 36) an Antriebsmotoren (13, 21, 24) angeschlossen sind und die Drehzahl der Motoren einer Schneckenlage unabhängig von der Drehzahl der Motoren der anderen Schneckenlagen steuerbar ist.

17. Vorrichtung nach einem der Ansprüche 8 bis 16, dadurch gekennzeichnet, daß an dem einen Ende der Trocknungskammer (11) eine durch die Kammerwandung ragende Einführeinrichtung (14) angeordnet ist, die aufgabeseitig mit einem Beschickungstrichter (16) verbunden ist und abgabeseitig über dem Aufgabeende der offenen Klärschlammfördermittel (12, 28-32) endet.

18. Vorrichtung nach Anspruch 17, dadurch gekennzeichnet, daß die Einführeinrichtung (14) aus einer Anzahl der Tröge (12) gleichen Anzahl von Einführschnecken besteht.

19. Vorrichtung nach einem der Ansprüche 8 bis 18, dadurch gekennzeichnet, daß sie auf einem Aufleger-Fahrgestell (40) angebracht ist.

## Claims

1. Process for drying sewage sludge, in which the sewage sludge, while being moved mechanically, is subjected in a plurality of process stages to the action of heat produced by burning fuels, the heat being supplied in at least one process stage by indirect heat exchange with hot gases produced by the combustion, and the vapours generated from the sewage sludge being extracted from the space above the sewage sludge and condensed and remaining gases being supplied to the said combustion in at least one process stage, characterised in that heat radiation and hot air are simultaneously produced by burning fuel oil or fuel gas, in a first process stage heat radiation is allowed to act directly on the mechanically moved sewage sludge and the latter is simultaneously brought into indirect heat exchange with the hot air which is produced, and in a second process stage and possibly further process stages the mechanically moved sewage sludge is brought into continuous indirect heat exchange with the hot air which is produced, the vapours generated in the second and possibly further process stages being removed and condensed, and organic compounds such as, for example, hydrocarbons and dioxins released from the sewage sludge in the first process stage being cracked in the vapour phase through the radiant heat at temperatures ranging from 800 to 1200°C.

2. Process according to claim 1, characterised in that the hot air which is partially cooled by heat exchange in the second and possibly further stages is used as a warm air stream to remove the vapours generated in these stages.

3. Process according to claim 1 or 2, characterised in that the hot air is brought into indirect heat exchange with the sewage sludge at a temperature ranging from 500 to 850°C.

4. Process according to one of claims 1 to 3, characterised in that the sewage sludge is moved in opposite directions in essentially rectilinear fashion in two successive process stages.

5. Process according to one of claims 1 to 4, characterised in that the vapours generated in the first process stage are extracted by means of an underpressure.

6. Process according to one of claims 1 to 5, characterised in that any gases remaining following the condensation of the vapours are filtered before combustion.

7. Process according to one of claims 1 to 6, characterised in that the vapours are condensed by means of cooling water which is cooled to a low temperature in a circuit.

8. Device for drying sewage sludge for carrying out the process according to one of claims 1 to 7, with a drying chamber (11), in which mechanical sewage sludge conveying means (12, 20, 23) are arranged, the conveying path of which means extends from a supply point (17) to a removal point (25), the drying chamber (11) being connected for flow purposes to a condenser (18) and provided with combustion means (1) for producing hot gases, to which the air stream delivered by the condenser (18) is supplied, and with means (34, 37) for the indirect heat exchange between the hot gases and the sewage sludge, characterized by the following features:
a) a plurality of heat radiators (1) are arranged side by side in the drying chamber (11) as combustion means and comprise a respective combustion chamber (4), the lower wall of which is formed as a heat radiation surface (5), a fuel oil or fuel gas burner (2) at each combustion chamber and a heat exchanger (7, 8) for heating the air by means of the hot combustion gases;
b) open sewage sludge conveying means (12) are arranged below the heat radiation surfaces (5) in the drying chamber (11), the conveying path of which means extends essentially from one to the other end of the radiation range of the heat radiators (1) and which are adapted for indirect heating by means of hot air, and
c) at least one layer of closed sewage sludge conveying means (20, 23) is arranged below the open sewage sludge conveying means (12), the conveying paths of which are essentially the same as the conveying path of the open sewage sludge conveying means (12), which means (20, 23) extend in opposite directions which alternate from layer to layer, are adapted for indirect heating by means of hot air and are provided with means (34) for removing the vapours.

9. Device according to claim 8, characterized in that the open sewage sludge conveying means consist of a plurality of troughs (12) which are arranged side by side in parallel and comprise screw conveyors (30) which can rotate in the troughs, and the troughs (12) are provided with a hollow casing (28) for the heating by means of hot air.

10. Device according to claim 9, characterized in that suction ducts (31), which extend in the longitudinal direction of the troughs and are provided with openings (32), are mounted on the troughs (12) and connected to the condenser (18).

11. Device according to one of claims 8 to 10, characterized in that the closed sewage sludge conveying means consist in each layer of a plurality of pipes (20) which are arranged side by side in parallel and comprise screw conveyors (36) which can rotate in the pipes, the pipes (20) are provided with a hollow casing (33) for heating by means of hot air, and an extraction duct (34), which extends in the longitudinal direction of the pipes and communicates via openings (39) with the pipe interior, is mounted on each pipe (20) and connected to the condenser (18).

12. Device according to claim 11, characterized in that the extraction duct is connected on one side to the central bore (37) in the hollow shaft (36a) or to the casing (33) of the pipe (20) and on the other side to the condenser (16).

13. Device according to claim 9 or 11, characterized in that the screw conveyors (30, 36) are provided with a hollow shaft (30a, 36a) for the heating by means of hot air.

14. Device according to claim 11, characterized in that each trough (12) and the pipes (20) lying below it are connected by fall pipe connection pieces (19, 22) provided alternately at each end, so that the sewage sludge follows a reciprocating conveying path through the trough and the pipes.

15. Device according to claim 14, characterized in that the fall pipe connection pieces (25) of the bottom layer of screw pipes (23) are connected to a discharge screw pipe (26), which is arranged transversely to the screw pipes (20, 23) lying above.

16. Device according to one of claims 9 to 15, characterized in that the screw conveyors (30, 36) are connected to drive motors (13, 21, 24), and the speed of the motors of one screw layer can be controlled independently of the speed of the motors of the other screw layers.

17. Device according to one of claims 8 to 16, characterized in that an intake device (14), which projects through the chamber wall, is arranged at one end of the drying chamber (11), which device is connected on the feed side to a charge hopper (16) and ends on the delivery side above the delivery end of the open sewage sludge conveying means (12, 28-32).

18. Device according to claim 17, characterized in that the intake device (14) consists of a number of intake screws which is equal to the number of troughs (12).

19. Device according to one of claims 8 to 18, characterized in that it is mounted on a support carriage (40).

## Revendications

1. Procédé pour la dessiccation de boues de décantation, selon lequel la boue de décantation est exposée, au cours de plusieurs étapes opérationnelles et sous avance mécanique, à l'effet de la chaleur produite par la combustion de matières combustibles, tandis que pendant au moins l'une de ces étapes, la chaleur est apportée par échange calorique indirect et par la combustion des gaz chauds produits et, dans au moins une autre étape les vapeurs dégagées des boues de décantation sont extraites de l'espace située au-dessus de ces boues et condensées, et les gaz résiduels sont amenés vers la combustion précitée, caractérisé en ce que l'on produit simultanément un rayonnement thermique et de l'air chaud par la combustion de fuel ou de gaz de chauffage et que, dans une première étape opérationnelle, on fait agir sur les boues de décantation en mouvement d'avance mécanique un rayonnement thermique direct et que l'on provoque simultanément un échange de chaleur indirect entre les boues et l'air chaud produit, et que, au cours d'une deuxième étape opérationnelle et éventuellement d'autres étapes, on provoque un échange calorique indirect continu entre les boues animées d'un mouvement mécanique et l'air chaud produit, tandis qu'au cours du deuxième et éventuellement les autres étapes opérationnelles, on évacue et on condense les vapeurs ainsi développées, les combinaisons organiques dégagées des boues au cours de la première étape du procédé, par exemple les hydrocarbures et les dioxines, subissant un craquage dans la phase d'évaporation sous l'effet de la chaleur de rayonnement à des températures entre 800 et 1200°C.

2. Procédé selon la revendication 1, caractérisé en ce que l'on utilise l'air chaud partiellement refroidi par échange calorique au cours de la deuxième et éventuellement des autres étapes comme courant d'air chaud pour l'évacuation des vapeurs développées au cours de ces étapes.

3. Procédé selon la revendication 1 ou 2, caractérisé en ce que l'on provoque un échange de chaleur indirect entre les boues de décantation et l'air chaud, à une température entre 500 et 850°C.

4. Procédé selon l'une des revendications 1 à 3, caractérisé dans deux étapes consécutives du procédé, le mouvement des boues de décantation s'effectue en deux directions opposées, sensiblement en ligne droite.

5. Procédé selon l'une des revendications 1 à 4, caractérisé en ce que les vapeurs développées au cours de la première étape du procédé sont extraites par aspiration sous pression négative.

6. Procédé selon l'une des revendications 1 à 5, caractérisé en ce que l'on soumet les gaz résiduels après la condensation des vapeurs à un filtrage avant leur combustion.

7. Procédé selon l'une des revendications 1 à 6, caractérisé en ce que la condensation des vapeurs est effectuée par de l'eau de refroidissement réfrigérée en circuit continu.

8. Dispositif pour la dessiccation de boues de décantation pour la mise en oeuvre du procédé conforme à l'une des revendications 1 à 7, comportant une chambre de dessiccation (11) dans laquelle sont disposés des moyens mécaniques (12, 20, 23) pour le transport des boues, dont le trajet s'étend entre une admission (17) et une évacuation (25), ladite chambre de dessiccation (11) étant raccordée dans le sens du courant à un condenseur (18) et munie de moyens de combustion pour la production de gaz chauds, lesquels sont amenés par le courant d'air émis par le condenseur (18), ainsi que les moyens (34, 37) pour l'échange de chaleur entre ces gaz chauds et les boues de décantation, caractérisé par les particularités suivantes :
a) dans la chambre de dessiccation (11) sont disposés côte-à-côte, pour servir de moyens de combustion, plusieurs radiateurs thermiques (1) comportant chacun une chambre de combustion (4) dont la paroi inférieure constitue la face de rayonnement thermique (5), un brûleur à fuel ou à gaz de chauffage (2) sur chaque chambre de combustion et un échangeur de chaleur (7, 8) pour le chauffage de l'air par les gaz de combustion chauds ;
b) sous les faces de rayonnement thermique (5) sont disposés, à l'intérieur de la chambre (11), des convoyeurs ouverts (12) pour les boues de décantation dont le trajet de transport s'étend sensiblement d'une extrémité à l'autre de la zone de rayonnement du radiateur (1) et qui sont aménagés pour un chauffage indirect par de l'air chaud ; et
c) sous ces convoyeurs ouverts (12) des boues de décantation, est disposée au moins une couche de convoyeur fermé (20, 23) dont les trajets de transport sont sensiblement identiques à celui du convoyeur ouvert (12) et qui se dirigent alternativement dans des sens opposés d'une couche à l'autre et sont aménagés pour le chauffage indirect par de l'air chaud et munis de moyens (34) pour l'évacuation des vapeurs.

9. Dispositif selon la revendication 8, caractérisé en ce que les convoyeurs ouverts aux boues de décantation sont constitués de plusieurs bacs (12) disposés côte-à-côté parallèlement et munis de vis sans fin (30), rotatives à l'intérieur desdits bacs et lesdits bacs (12) étant équipés d'un revêtement creux (28) en vue du chauffage par de l'air chaud.

10. Dispositif selon la revendication 9, caractérisé en ce que, sur les bacs (12), sont disposés des canaux d'aspiration (31) s'étendant dans le sens longitudinal des bacs et munis d'orifices (32), ces canaux étant raccordés au condenseur (18).

11. Dispositif selon l'une des revendications 8 à 10, caractérisé en ce que les convoyeurs fermés des boues de décantation sont constitués, dans chaque couche, de plusieurs tubes (20) disposés côte-à-côté parallèlement, comportant des vis sans fin (36) tournant à l'intérieur, lesdits tubes (20) étant équipés d'un revêtement creux (33) en vue de leur chauffage par air chaud, tandis qu'à chacun des tubes (20) est fixé un canal d'extraction (34) s'étendant en direction longitudinale des tubes, relié à l'intérieur de celui-ci par des orifices (39) et raccordé au condenseur (18).

12. Dispositif selon la revendication 11, caractérisé en ce que le canal d'extraction est raccordé, d'une part, à l'alésage central (37) de l'arbre creux (36a) ou au revêtement (33) du tube (20) et, d'autre part, au condenseur (18).

13. Dispositif selon la revendication 9 ou 11, caractérisé en ce que les vis sans fin (30, 36) sont équipées d'un arbre creux (30a, 36a) pour le chauffage par air chaud.

14. Dispositif selon la revendication 11, caractérisé en ce que chaque bac (12) et les tubes (20) situés sous celui-ci sont reliés par des raccords à chute (19, 22) prévus alternativement aux deux extrémités, de manière à obtenir un trajet en directions alternées pour le transport des boues de décantation à travers ladite cuve et lesdits tubes.

15. Dispositif selon la revendication 14, caractérisé en ce que les raccords à chute (25) de la couche la plus basse des tubes (23) sont raccordés à un tube (26) d'évacuation à vis sans fin lequel est disposé transversalement aux tubes (20, 23) situés plus haut.

16. Dispositif selon l'une des revendications 9 à 15, caractérisé en ce que les vis sans fin (30, 36) sont raccordées à des moteurs d'entraînement (13, 21, 24) et en ce que la vitesse de rotation des moteurs d'une couche de vis sans fin peut être pilotée de manière indépendante de la vitesse de rotation des moteurs des autres couches.

17. Dispositif selon l'une des revendications 8 à 16, caractérisé en ce que, sur une extrémité de la chambre de dessiccation (11) est prévu un dispositif d'introduction (14) passant à travers la paroi de ladite chambre lequel est relié, du côté chargement, d'une trémie (16), et qui s'achève du côté déchargement au-dessus de l'extrémité de chargement des convoyeurs ouverts (12, 28 à 32).

18. Dispositif selon la revendication 17, caractérisé en ce que le dispositif d'introduction (14) est constitué d'un nombre de vis sans fin, pour l'introduction, égal à celui des cuves (12).

19. Dispositif selon l'une des revendications 8 à 18, caractérisé en ce qu'il est fixé sur un châssis roulant (40).
